# EUROPEAN PATENT SPECIFICATION

(11) **EP 3 293 103 B1**
(45) Date of publication and mention of the grant of the patent: **04.05.2022**
(21) Application number: 17186439.0
(22) Date of filing: 16.08.2017
(51) Int. Cl.: B62M 9/02, B62M 11/02, F16H 7/02, F16H 7/08

(54) **A COMBINATION OF A TRANSMISSION AND A REAR WHEEL, AND AN ELECTRIC VEHICLE PROVIDED WITH THE COMBINATION**
KOMBINATION AUS EINEM GETRIEBE UND EINEM HINTERRAD UND EINEM MIT DER KOMBINATION AUSGESTATTETEN ELEKTROFAHRZEUG
COMBINAISON D'UNE TRANSMISSION ET D'UNE ROUE ARRIÈRE, ET UN VÉHICULE ÉLECTRIQUE POURVU DE LA COMBINAISON

(30) Priority: 16.08.2016 CN 201620889516 U
(43) Date of publication of application: 14.03.2018
(73) Proprietor: Zhejiang Easy Vehicle Co.,Ltd., New District of West City Yongkang, Zhejiang 321300 (CN)
(72) Inventor: YU, Sam, Yongkang, Zhejiang 321300 (CN); WEN, Yong, Yongkang, Zhejiang 321300 (CN)
(74) Representative: Geskes, Christoph

(56) References cited:
- EP-A1- 2 942 267
- CN-Y- 2 466 031
- CN-Y- 2 717 810
- GB-A- 2 307 218
- JP-A- H0 811 771
- JP-A- H08 230 753
- US-A1- 2014 346 752

## Description

The present invention relates to the technical field of mechanical apparatus, particularly to a transmission and an electric vehicle provided with the transmission, specifically to a transmission with small size, light weight, being capable of efficiently improving endurance mileage, and low energy consumption, and to an electric vehicle provided with the transmission. At present, most of transmissions applied to automobiles are relatively complex and cumbersome. When applied to an electric vehicle, particularly for an electric scooter, the transmission is required to be small, simple, practical, and to be with high safety factor and long endurance mileage. However, when a vehicle is coasting, since the existing drive train is not provided with a unidirectional transmission, both of the drive train and power unit will rotate during the coasting, thereby resulting in large coasting resistance and short coasting distance. The existing drive train is poor in practicality, unable to satisfy the requirements for a transmission by various transportation tools in the market.

EP 2 942 267 A1 which shows the preamble of claim 1, discloses an electric drive system for a vehicle comprising a transmission with an input end configured to be connected with an electric motor, and an output end configured to be connected with a rear wheel. The transmission comprises a gear transmission mechanism and a pulley transmission mechanism, the gear transmission mechanism comprising a primary gear configured to be connected to the electric motor; the pulley transmission mechanism comprising a driving wheel, a driven wheel and a synchronous belt; the driving wheel being connected with the primary gear through a gear shaft, a unidirectional transmission mechanism being configured to be connected to the driven wheel, the unidirectional transmission mechanism being used for driving the rear wheel to rotate. The unidirectional transmission mechanism is provided in the driven wheel.

US 2014/0 346 752 A1 discloses a cycle having a toothed belt and a rear suspension. JP H08 230 753 A discloses a motor assisted bicycle. CN 2 717 810 Y discloses a speed changer for an electric bicycle. GB 2 307 218 A discloses a battery powered electric vehicle. CN 2 466 031 Y discloses an electric bicycle with a belt pulley unit. JP H08 11 771 A discloses a bicycle with a motor.

The objectives of the present invention are to provide a transmission with small size, light weight, being capable of efficiently improving endurance mileage, and low energy consumption, and to provide an electric vehicle provided with the transmission, so as to solve the problem of large coasting resistance and short coasting distance due to the conventional drive train being not provided with a unidirectional transmission mechanism when a vehicle is coasting.

In order to solve the technical problem above, the present invention provides a combination of a transmission and a rear wheel, the transmission with an input end configured to be connected with a driving device, and an output end connected with the rear wheel, the transmission comprising a gear transmission mechanism and a pulley transmission mechanism, the gear transmission mechanism comprising a primary gear configured to be connected to the driving device; the pulley transmission mechanism comprising a driving wheel, a driven wheel and a synchronous belt; the driving wheel being connected with the primary gear through a gear shaft, a unidirectional transmission mechanism connected to the driven wheel, the unidirectional transmission mechanism being used for driving the rear wheel to rotate. The unidirectional transmission mechanism is provided in the rear wheel. The unidirectional transmission mechanism is connected with the driven wheel through a thread bushing. The transmission further comprises a box body provided with an opening, one side of the opening being provided with a box body cover, the other side of the opening being provided with a cover plate, the box body cover, cover plate and box body constituting a closed housing, both of the gear transmission mechanism and the pulley transmission mechanism being provided in the housing. A sealing plate is provided at the connection of the box body cover and the box body, and the sealing plate is disposed over the gear shaft. Wherein, the rear wheel is provided with a first gear, and the periphery of the unidirectional transmission mechanism is provided with a second gear engaged with the first gear. Wherein, the unidirectional transmission mechanism is a unidirectional flywheel or unidirectional bearing.

Wherein, the rear wheel is further provided with a wheel cover plate at the side away from the driven wheel, and the wheel cover plate is fixed to the rear wheel through screws. Wherein, the driving device is a motor, an output shaft of the motor is connected with the primary gear, the output shaft is used for driving the primary gear to rotate.

The present invention also provides an electric vehicle comprising the transmission above.

The technical solutions above of the present invention have the following advantages: The transmission provided by the present application is with simple structure, occupies small space, and is light in weight; it provides power output by the driving device, transmits power to the pulley transmission mechanism by the gear transmission mechanism, and the pulley transmission mechanism drives the rear wheel to rotate through the unidirectional transmission mechanism, such that the vehicle moves forward; when the power output is stopped, due to the inertia effect of the vehicle and the small rotation resistance of the unidirectional transmission mechanism, the vehicle can smoothly coast, while the driving device, gear transmission mechanism and pulley transmission mechanism are not rotating, thereby achieving the advantageous effects of saving power consumption and improving endurance mileage. The transmission is of strong practicability, beneficial to the standardized production and promotion.
- FIG. 1: is an assembly structural diagram of a transmission embodiment of the present invention;
- FIG. 2: is an isometric view at left front 45° of a transmission embodiment of the present invention;
- FIG. 3: is a front view of a transmission embodiment of the present invention;
- FIG. 4: is a rear view of a transmission embodiment of the present invention;
- FIG. 5: is a bottom view of a transmission embodiment of the present invention;
- FIG. 6: is a top view of a transmission embodiment of the present invention;
- FIG. 7: is a left view of a transmission embodiment of the present invention;
- FIG. 8: is a right view of a transmission embodiment of the present invention.

In the figures: 1: box body; 2: synchronous belt; 3: driven wheel; 4: thread bushing; 5: cover plate; 6: rear wheel; 7: unidirectional transmission mechanism; 8: wheel cover plate; 9: motor; 10: box body cover; 11: primary gear; 12: sealing plate; 13: gear shaft; 14: driving wheel.

In order to make the objectives, technical solutions and advantages of the embodiments of the present invention clearer, a clear and complete description of the technical solutions in the embodiments of the present invention will be made hereinafter in combination with the drawings in the embodiments of the present invention. It is apparent that the described embodiments are not all but a part of the embodiments of the present invention. Based on the embodiments of the present invention, all other embodiments obtained by those of ordinary skills in the art without creative work are within the scope of the present invention.

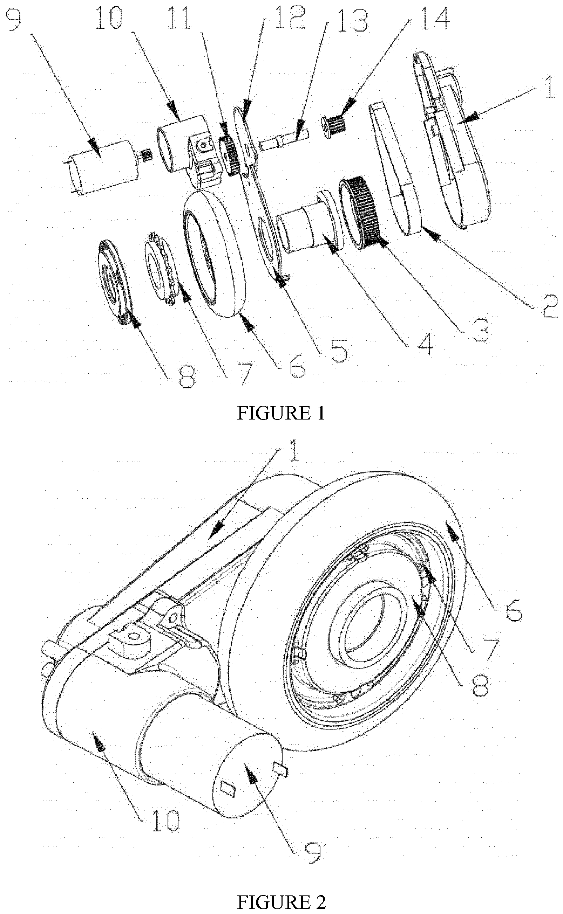

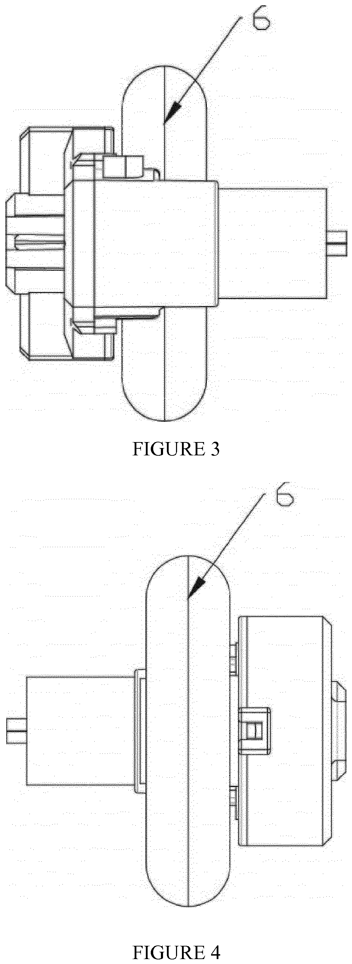

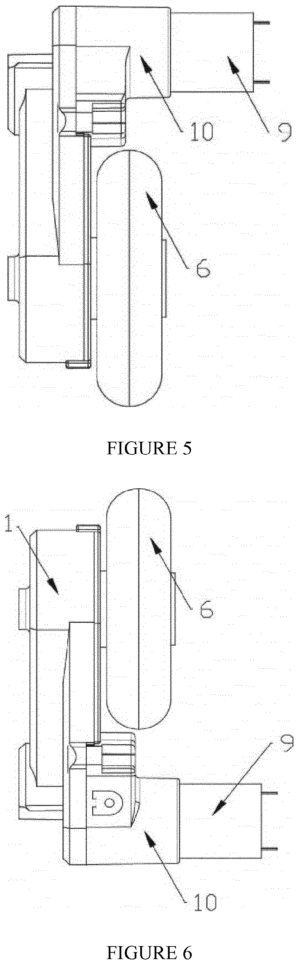

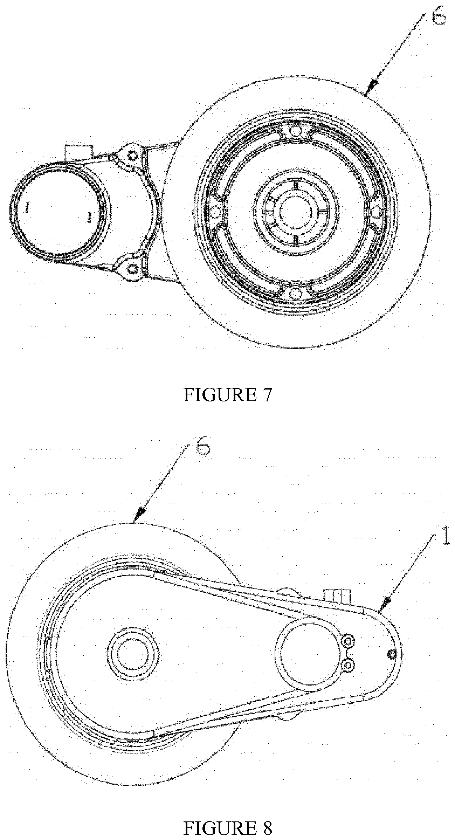

As illustrated in Figures 1 to 8, the embodiment of the present invention provides a transmission, an input end of the transmission being connected with a driving device, the driving device providing a power source for the transmission, an output end being connected with a rear wheel 6 for driving the rear wheel 6 to rotate, such that the vehicle moves forward; the transmission specifically comprising a gear transmission mechanism and a pulley transmission mechanism, the gear transmission mechanism comprising a primary gear 11 connected to the driving device, the driving device driving the primary gear 11 to rotate; the pulley transmission mechanism comprising a driving wheel 14, a driven wheel 3 and a synchronous belt 2; the driving wheel 14 being connected with the primary gear 11 through a gear shaft 13, a unidirectional transmission mechanism 7 connected to the driven wheel 3 being provided in the rear wheel 6, the unidirectional transmission mechanism 7 being used for driving the rear wheel 6 to rotate. In the present embodiment, the transmission provided by the present application comprises a two-stage gearshift, wherein the power provided by the driving device is transmitted to the pulley transmission mechanism through the gear transmission mechanism, the pulley transmission mechanism transmits the power to the unidirectional transmission mechanism 7, the unidirectional transmission mechanism 7 further drives the rear wheel 6 to rotate. The transmission is with simple structure, occupies small space, and is light in weight. It efficiently solves the problem of complex and cumbersome internal structure of the existing transmission. Wherein, the driving wheel 14 is a secondary front pulley of the synchronous belt 2, and the driven wheel 3 is a secondary rear pulley of the synchronous belt 2.

Specifically, when operating, the transmission provided by the present application provides power output by the driving device, transmits the power to the pulley transmission mechanism by the gear transmission mechanism, and the pulley transmission mechanism drives the rear wheel 6 to rotate through the unidirectional transmission mechanism 7, such that the vehicle moves forward; when the power output is stopped, due to the inertia effect of the vehicle and the relatively small rotation resistance of the unidirectional transmission mechanism 7, the vehicle can smoothly coast, while the driving device, gear transmission mechanism and pulley transmission mechanism are not rotating, thereby achieving the advantageous effects of saving power consumption and improving endurance mileage.

Specifically, the unidirectional transmission mechanism 7 is connected with the driven wheel 3 by a thread bushing 4. In the present embodiment, the inner sides of the unidirectional transmission mechanism 7 and the driven wheel 3 are both provided with inner threads matching the thread bushing 4. This coupling method is of good transmission effect, and is simple in process, being capable of improving the installation efficiency of the transmission and is also easy for maintenance and overhaul.

Preferably, a first gear is provided in the rear wheel 6, and the periphery of the unidirectional transmission mechanism 7 is provided with a second gear engaged with the first gear, so as to complete the power transmission from the unidirectional transmission mechanism 7 to the rear wheel 6. It is of reliable operation and wide rotation speed range by employing the method of gear engaging, which is conducive to ensuring the normal operation of the transmission. Meanwhile, it is of light weight and small size, is simple in manufacturing process and low in production costs. It is helpful for improving economy, suitable for electric scooters with small costs.

Preferably, the unidirectional transmission mechanism 7 is a unidirectional flywheel or unidirectional bearing. A ratchet is provided in the unidirectional flywheel, through the ratchet a unidirectional rotation transmission is achieved; the unidirectional bearing is a bearing that can freely rotate in one direction and locked in the other direction. It is of small resistance by providing the unidirectional flywheel or the unidirectional bearing, so that the vehicle can smoothly coast; particularly for a small electric scooter, it can be ridden or driven in the form of one foot thrusting against the ground as a non-powered scooter, when the vehicle battery runs out of power.

Further, in order to avoid exposing the unidirectional transmission mechanism 7 and to improve aesthetics, the rear wheel 6 is further provided with a wheel cover plate 8 at the side away from the driven wheel 3, and the wheel cover plate 8 is fixed to the rear wheel 6 through screws. Particularly, in addition to the fixing method by using screws, the wheel cover plate 8 and the rear wheel 6 can also use other fixing connection methods such as engaging, embedding or clamping.

Further, in order to prevent ash from going into the transmission mechanism transmission affecting the usage, and concerning the aesthetics, the transmission further comprises a box body 1 provided with an opening, one side of the opening being provided with a box body cover 10, the other side of the opening being provided with a cover plate 5, the box body cover 10, cover plate 5 and box body 1 constituting a closed housing, both of the gear transmission mechanism and the pulley transmission mechanism being provided in the housing. Wherein, the cover plate 5 is provided at the connection of the rear wheel 6 and the box body 1.

Further, a sealing plate 12 is provided at the connection of the box body cover 10 and the box body 1, and the sealing plate 12 is disposed over the gear shaft 13. In the present embodiment, the contour shape of the sealing plate 12 matches the contour shape of the opening of the box body 1. It avoids the overflow of the lubricating oil on the primary gear 11, which affects the normal use of the transmission, by providing the sealing plate 12.

Preferably, the driving device is a motor 9, an output shaft of the motor 9 is connected with the primary gear 11. The output shaft is used for driving the primary gear 11 to rotate. In the present embodiment, the motor 9 is a 12V high-rotation-speed micro-motor 9. Different from the conventional 6812-type motor 9, it is of lighter weight, lower cost and better economy. Particularly, in addition to the motor 9, the driving device can also be other power sources such as battery, solar or hydraulic or other power sources.

The present invention also provides an electric vehicle comprising the transmission above. It consumes low power, is capable of efficiently improving the endurance mileage of the electric vehicle, significantly enhancing the demands for transportation of the consumers, by using the transmission with the structure above. It should be noted that due to the light weight and small size, the transmission provided by the present application can also be widely used in the field of electric scooter, it is particularly suitable for electric scooters with two wheels, three wheels and four wheels. In addition to the descriptions above, the transmission above can also be suitable for ordinary vehicles, achieving the advantageous effect of reducing power consumption.

In summary, the present invention provides a transmission, with an input end connected with a driving device, an output end connected with a rear wheel, comprising a gear transmission mechanism and a pulley transmission mechanism, the gear transmission mechanism comprising a primary gear connected to the driving device; the pulley transmission mechanism comprising a driving wheel, a driven wheel and a synchronous belt; the driving wheel being connected with the primary gear through a gear shaft, a unidirectional transmission mechanism connected to the driven wheel being provided in the rear wheel, the unidirectional transmission mechanism being used for driving the rear wheel to rotate. The transmission provided by the present application is with simple structure, small footprint and light weight; and provides power output by the driving device, transmits power to the pulley transmission mechanism by the gear transmission mechanism. The pulley transmission mechanism drives the rear wheel to rotate through the unidirectional transmission mechanism, such that the vehicle moves forward; when the power output is stopped, due to the inertia effect of the vehicle and the small rotation resistance of the unidirectional transmission mechanism, the vehicle can smoothly coast while the driving device, gear transmission mechanism and pulley transmission mechanism are not rotating, thereby achieving the advantageous effects of saving power consumption and improving endurance mileage. The transmission is of strong practicability, is beneficial to the standardized production and promotion.

It should be noted that the embodiments above are only used to illustrate the technical solutions of the present invention, and are not intended to be limiting thereto; although the present invention has been described in detail with reference to the foregoing embodiments, it should be understood by those of ordinary skills in the art that the technical solutions described in the foregoing embodiments may be modified, or equivalently replaced with some of the technical features.

The present invention is defined by claim 1 and preferred embodiments are defined by dependent claims 2 to 6.

## Claims

1. A combination of a transmission and a rear wheel (6), the transmission with an input end configured to be connected with a driving device (9), and an output end connected with the rear wheel (6), the transmission comprising
- a gear transmission mechanism and
- a pulley transmission mechanism,
wherein
- the gear transmission mechanism comprises a primary gear (11) configured to be connected to the driving device (9);
- the pulley transmission mechanism comprises a driving wheel (14), a driven wheel (3) and a synchronous belt (2);
- the driving wheel (14) is connected with the primary gear (11) through a gear shaft (13),
- a unidirectional transmission mechanism (7) is connected to the driven wheel (3),
- the unidirectional transmission mechanism (7) is used for driving the rear wheel (6) to rotate,
**characterized in that**
- the unidirectional transmission mechanism (7) is provided in the rear wheel (6),
- the unidirectional transmission mechanism (7) is connected to the driven wheel (3) through a thread bushing (4),
- the transmission further comprises a box body (1) provided with an opening,
- one side of the opening is provided with a box body cover (10),
- the other side of the opening is provided with a cover plate (5),
- the box body cover (10), cover plate (5) and box body (1) constitute a closed housing,
- both of the gear transmission mechanism and the pulley transmission mechanism are provided in the housing,
- a sealing plate (12) is provided at the connection of the box body cover (10) and the box body (1), and the sealing plate (12) is disposed over the gear shaft (13).

2. Combination of claim 1, **characterized in that**: the rear wheel (6) is provided with a first gear, and the periphery of the unidirectional transmission mechanism (7) is provided with a second gear engaged with the first gear.

3. Combination of any of claims 1 or 2, **characterized in that**: the unidirectional transmission mechanism (7) is a unidirectional flywheel or unidirectional bearing.

4. Combination of claim 1, **characterized in that**: the rear wheel (6) is further provided with a wheel cover plate (8) at the side away from the driven wheel (3), and the wheel cover plate (8) is fixed to the rear wheel (6) through screws.

5. Combination of claim 1, further comprising a driving device, **characterized in that**: the driving device is a motor (9), an output shaft of the motor (9) is connected with the primary gear (11), and the output shaft is used for driving the primary gear (11) to rotate.

6. Electric vehicle, **characterized in that**: the electric vehicle comprises the combination of any of claims 1 to 5.

## Patentansprüche

1. Eine Kombination aus einem Getriebe und einem Hinterrad (6), wobei das Getriebe ein Eingangsende, das zur Verbindung mit einer Antriebsvorrichtung (9) konfiguriert ist, und ein Ausgangsende, das mit dem Hinterrad (6) verbunden ist, aufweist, wobei das Getriebe Folgendes umfasst:
- einen Zahnradgetriebemechanismus und
- einen Riemenscheibengetriebemechanismus, wobei
- der Zahnradgetriebemechanismus ein Primärzahnrad (11) umfasst, das so konfiguriert ist, dass es mit der Antriebsvorrichtung (9) verbunden werden kann;
- der Riemenscheibengetriebemechanismus ein Antriebsrad (14), ein angetriebenes Rad (3) und einen Synchronriemen (2) umfasst;
- das Antriebsrad (14) über eine Zahnradwelle (13) mit dem Primärzahnrad (11) verbunden ist,
- ein unidirektionaler Getriebemechanismus (7) mit dem angetriebenen Rad (3) verbunden ist,
- der unidirektionale Getriebemechanismus (7) für den rotierenden Antrieb des Hinterrades (6) verwendet ist,
**dadurch gekennzeichnet, dass**
- der unidirektionale Getriebemechanismus (7) im Hinterrad (6) vorgesehen ist,
- der unidirektionale Getriebemechanismus (7) über eine Gewindebuchse (4) mit dem angetriebenen Rad (3) verbunden ist,
- das Getriebe außerdem einen Gehäusekörper (1) umfasst, der mit einer Öffnung versehen ist,
- eine Seite der Öffnung mit einem Gehäusekörperdeckel (10) versehen ist,
- die andere Seite der Öffnung mit einer Abdeckplatte (5) versehen ist,
- der Gehäusekörperdeckel (10), die Abdeckplatte (5) und der Gehäusekörper (1) ein geschlossenes Gehäuse bilden,
- sowohl der Zahnradgetriebemechanismus als auch der Riemenscheibengetriebemechanismus in dem Gehäuse untergebracht sind,
- an der Verbindung des Gehäusekörperdeckels (10) und des Gehäusekörpers (1) eine Dichtungsplatte (12) vorgesehen und die Dichtungsplatte (12) über der Zahnradwelle (13) angeordnet ist.

2. Kombination nach Anspruch 1, **dadurch gekennzeichnet, dass**: das Hinterrad (6) mit einem ersten Gang und der Umfang des unidirektionalen Getriebemechanismus (7) mit einem zweiten Zahnrad versehen ist, das mit dem ersten Zahnrad in Eingriff steht.

3. Kombination nach einem der Ansprüche 1 oder 2, **dadurch gekennzeichnet, dass**: der unidirektionale Getriebemechanismus (7) ein unidirektionales Schwungrad oder ein unidirektionales Lager ist.

4. Kombination nach Anspruch 1, **dadurch gekennzeichnet, dass** das Hinterrad (6) auf der dem Antriebsrad (3) abgewandten Seite zusätzlich mit einer Radabdeckplatte (8) versehen und die Radabdeckplatte (8) mit Schrauben am Hinterrad (6) befestigt ist.

5. Kombination nach Anspruch 1, weiterhin umfassend eine Antriebsvorrichtung, **dadurch gekennzeichnet, dass**: die Antriebsvorrichtung ein Motor (9) ist, eine Ausgangswelle des Motors (9) mit dem Primärzahnrad (11) verbunden ist, und die Ausgangswelle für den rotierenden Antrieb des Primärzahnrades (11) verwendet ist.

6. Elektrofahrzeug, **dadurch gekennzeichnet, dass**: das Elektrofahrzeug die Kombination nach einem der Ansprüche 1 bis 5 umfasst.

## Revendications

1. Combinaison d'une transmission et d'une roue arrière (6), ladite transmission ayant une extrémité d'entrée configurée pour être reliée à un dispositif d'entraînement (9), et une extrémité de sortie reliée à ladite roue arrière (6), ladite transmission comprenant
- un mécanisme de transmission par engrenage et
- un mécanisme de transmission à poulie, dans laquelle
- ledit mécanisme de transmission par engrenage comprend un engrenage primaire (11) configuré pour être relié audit dispositif d'entraînement (9);
- ledit mécanisme de transmission par poulie comprend une roue motrice (14), une roue entraînée (3) et une courroie synchrone (2);
- ladite roue motrice (14) est reliée audit engrenage primaire (11) par un arbre de transmission (13),
- un mécanisme de transmission unidirectionnel (7) est relié à ladite roue entraînée (3),
- ledit mécanisme de transmission unidirectionnelle (7) est utilisé pour entraîner ladite roue arrière (6) en rotation,
**caractérisée en ce que**
- ledit mécanisme de transmission unidirectionnelle (7) est prévu dans ladite roue arrière (6),
- ledit mécanisme de transmission unidirectionnel (7) est relié à ladite roue entraînée (3) par une douille filetée (4),
- ladite transmission comprend en outre un corps de boîte (1) pourvu d'une ouverture,
- un côté de ladite ouverture est pourvu d'un couvercle (10) de corps de boîte,
- l'autre côté de ladite ouverture est pourvu d'une plaque de recouvrement (5),
- ledit couvercle (10) de corps de boîte, ladite plaque de couverture (5) et ledit corps de boîte (1) constituent un boîtier fermé,
- ledit mécanisme de transmission par engrenage et ledit mécanisme de transmission par poulie sont tous deux prévus dans ledit boîtier,
- une plaque d'étanchéité (12) est prévue au niveau de ladite connexion entre ledit couvercle (10) de corps de boîte et ledit corps de boîte (1), et ladite plaque d'étanchéité (12) est disposée sur ledit arbre de transmission (13).

2. Combinaison selon la revendication 1, **caractérisée en ce que** ladite roue arrière (6) est pourvue d'un premier engrenage, et la périphérie dudit mécanisme de transmission unidirectionnelle (7) est pourvue d'un second engrenage engagé avec ledit premier engrenage.

3. Combinaison selon la revendication 1 ou 2, **caractérisée en ce que** ledit mécanisme de transmission unidirectionnel (7) est un volant unidirectionnel ou un palier unidirectionnel.

4. Combinaison selon la revendication 1, **caractérisée en ce que** ladite roue arrière (6) est en outre pourvue d'une plaque de recouvrement de roue (8) sur le côté éloigné de ladite roue entraînée (3), et ladite plaque de recouvrement de roue (8) est fixée à ladite roue arrière (6) par des vis.

5. Combinaison selon la revendication 1, comprenant en outre un dispositif d'entraînement, **caractérisée en ce que** ledit dispositif d'entraînement est un moteur (9), un arbre de sortie dudit moteur (9) est relié audit engrenage primaire (11), et ledit arbre de sortie est utilisé pour entraîner ledit engrenage primaire (11) en rotation.

6. Véhicule électrique, **caractérisé en ce que** le véhicule électrique comprend la combinaison selon l'une des revendications 1 à 5.
